# EUROPEAN PATENT SPECIFICATION

(11) **EP 0 556 989 B1**
(45) Date of publication and mention of the grant of the patent: **22.07.1998**
(21) Application number: 93300878.1
(22) Date of filing: 05.02.1993
(51) Int. Cl.: G02F 1/136

(54) **Liquid crystal display device**
Flüssigkristallanzeigevorrichtung
Dispositif d'affichage à cristal liquide

(30) Priority: 21.02.1992 JP 34919/92
(43) Date of publication of application: 25.08.1993
(73) Proprietor: KABUSHIKI KAISHA TOSHIBA, Kawasaki-shi, Kanagawa-ken 210 (JP); International Business Machines Corporation, Armonk, N.Y. 10504 (US)
(72) Inventor: Ogawa,Meiko,c/o Intell.Property Div., Minato-ku, Tokyo (JP); Suzuki,Kouhei,c/o Intell.Property Div., Minato-ku, Tokyo (JP); Kitahara,Hiroaki,c/o Yamato Intell.Property, Yamato-shi, Kanagawa-ken 242 (JP); Kimura,Shinichi,c/o Yamoto Intell.Property, Yamato-shi, Kanagawa-ken 242 (JP); Ichioka,Yoshikazu,c/o Intell.Property Div., Minato-ku, Tokyo (JP)
(74) Representative: Luckhurst, Anthony Henry William

(56) References cited:
- EP-A- 143 038
- EP-A- 423 824
- PATENT ABSTRACTS OF JAPAN vol. 11, no. 261 (P-609) 25 August 1987; & JP-A-62 066 231
- PATENT ABSTRACTS OF JAPAN vol. 13, no. 572 (P-978) 18 December 1989; & JP-A-01 239 531

## Description

This invention relates to a liquid crystal display device to be used for displays such as in portable TV sets and lap-top personal computers, for example.

The liquid crystal displays (liquid crystal display devices) weigh light, permit a decrease in thickness, and consume only a small amount of electric power and, owing to these benefits, have found utility in such applications as displays for portable TV sets and lap-top personal computers. Research directed to the development of liquid crystal displays of larger dimensions and higher degrees of accuracy are now underway at various organs.

As a matrix substrate for driving a liquid crystal, the active matrix substrate which has mutually intersecting sets each of a plurality of address wires and data wires and a thin-film transistor (or MIM element) formed of amorphous Si (hereinafter referred to briefly as "a-Si") or poly Si (hereinafter referred to briefly as "p-Si"), for example, laid out on a substrate has been known. The liquid crystal display device is constructed by airtightly interposing a liquid crystal between this liquid crystal-driving active matrix substrate and a counter substrate.

Incidentally, the liquid crystal-driving active matrix substrate of this sort is generally tested, during the process of production, to conform the effective lighting condition of the component picture elements and detect any possible line defect in address wires and data wires, for example.

As a means for protecting the liquid crystal-driving active matrix substrate of this sort against degradation by static electricity, the construction in which the address wires and data wires are short-circuited with a short-circuiting wire formed of a wiring material in a region outside the display region as disclosed in Japanese Unexamined Patent Publication No. 59,475/1986 has been known.

When the address wires and data wires are short-circuited in the manner described above, however, though the detection of a line defect in the address wires and data wires is attainable, the test for confirming the effective lighting condition of the component picture elements is not attainable unless the short-circuiting wire is cut off. Moreover, since the short-circuiting wire has been cut off by the time that the liquid crystal display device is completed, the produced construction is susceptible to the influence of static electricity.

To cope with this problem, the idea of establishing electrical interconnection severally between the address wires and data wires or between the individual wires as through the medium of a two-terminal operation thin-film transistor has been conceived as disclosed in Japanese Unexamined Patent Publication No. 220,289/1988, for example.

Since the short-circuiting wire for establishing electrical interconnection between the address wires and other wires as described above is formed as disposed in the region outside the display region, namely along the periphery of the liquid crystal-driving active matrix substrate, however, it has the problem of readily succumbing to wire disconnection due to breakage after the produced substrate is cut out in a prescribed size. Though this problem can be coped with by interposing a gap of at least several hundred µm between the outer edge of the substrate and the short-circuiting wire, this insertion of the gap entails the problem of enlarging the substrate.

Besides, since the two-terminal operation thin film transistor which is interposed between the address wires and other wires and the short-circuiting wire is subjected to application of static electricity of fairly high voltage, it has the problem of readily succumbing to wire disconnection due to breakage caused by the static electricity.

There are times when the gate electrode of the two-terminal operation thin-film transistor is formed on the short-circuiting wire through the medium of an insulating film. Since the leading terminal of the gate electrode is liable to sustain local damage by static electricity owing to the application of the static electricity of high voltage, the disadvantage ensues that the address wires and data wires leading to the gate electrode are short-circuited to the short-circuiting wire and, as a result, the confirmation of the effective lighting condition of the component picture elements becomes no longer obtainable. Once this short-circuit is suffered to occur, the disadvantage arises that defective display will appear when the liquid device is turned on without separation of the short-circuiting wire.

In the conventional liquid crystal display device, the idea of establishing electrical interconnection severally between the address wires and data wires through the medium of the two-terminal operation thin film transistor is conceived as described above for the purpose of protecting the device against the mischief of static electricity and detecting a point defect during the process of production. When the substrate is cut out in the prescribed size, the problem of the short-circuiting wire readily succumbing to disconnection due to breakage, the problem of the two-terminal operation thin-film transistor readily succumbing to disconnection due to breakage caused by static electricity, and the problem of the address wires and data wires being readily short-circuited to the short-circuiting wire due to local breakage of the leading terminals of the gate electrode by static electricity are liable to occur.

Coupling elements formed of a high resistance material for electrically interconnecting the intersecting point of the internal short-circuiting bus and the source and gate buses, the coupling element may be a nonlinear element in a display region of a liquid crystal display element is disclosed by EP-A-423824.

This invention has originated in the urge to overcome the various problems mentioned above.

The first object of this invention is to provide a liquid crystal display device which allows a dimensional reduction in a substrate possessing an insulating surface (hereinafter referred to briefly as "insulating substrate") and succumbs only sparingly to disconnection of circuit by breakage.

The second object of this invention is to provide a liquid crystal display device which succumbs only sparingly to disconnection of circuit due to breakage caused by static electricity.

The third object of this invention is to provide a liquid crystal display device which is incapable of establishing continuity between address wires and data wires leading to a gate electrode on the one part and a short-circuiting wire on the other part even when the application of static electricity of high voltage inflicts local damage of static electricity on the leading terminal of the gate electrode.

To accomplish the objects described above, the first aspect of this invention is directed to a liquid crystal display device comprising an insulating substrate manifesting an insulating property at least on a surface thereof; a plurality of address wires formed in a display region on the insulating substrate; a plurality of data wires formed to intersect the address wires; first thin-film transistors formed one each at the points of intersection of the address wires and data wires and having gate electrodes electrically connected to the address wires and drain electrodes electrically connected to the data wires; picture element electrodes formed one each near the points of intersection and electrically connected to the source electrodes of the first thin-film transistors, and a short-circuiting wire formed along at least part of a periphery of the display region of the insulating substrate and adapted to short-circuit the address wires and data wires to each other through a first resistor made of a second thin-film transistor; wherein the short-circuiting wire has a region in which the second thin-film transistor is formed, and the formed region is surrounded by the short-circuiting wire.

The second aspect of this invention is directed to a liquid crystal display device comprising an insulating substrate manifesting an insulating property at least on a surface thereof; a plurality of address wires formed in a display region on the insulating substrate; a plurality of data wires formed to intersect the address wires; first thin-film transistors formed one each at the points of intersection of the address wires and data wires and having gate electrodes electrically connected to the address wires and drain electrodes electrically connected to the data wires; picture elements formed one each near the points of intersection and electrically connected to the source electrodes of the first thin-film transistors; and a short-circuiting wire formed along at least part of a periphery of the display region of the insulating substrate and adapted to short-circuit the address wires and data wires to each other through a first resistor made of a second thin-film transistor; wherein the short-circuiting wire has a region in which the second thin-film transistor is formed, and said formed region is surrounded by the short-circuiting wire except that a gate electrode of the second thin-film transistor protrudes outside the short-circuiting wire.

The liquid crystal display a device of this invention allows a dimensional reduction in the insulating substrate and succumbs only sparingly to disconnection of circuit due to breakage because the short-circuiting wire formed along the periphery of the display region on the insulating substrate is electrically connected inside the region in which the resistor made of the thin-film transistor is formed.

Further, the liquid crystal display device succumbs only sparingly to disconnection of circuit due to damage caused by static electricity because the source electrode opposed to the thin-film transistor interposed between the address wires and data wires one the one part and the short-circuiting wire on the other part and the drain electrodes are severally shaped like a comb or the channels of the thin-film transistor are formed linearly or zigzaggedly in directions perpendicular to the address wires and data wires.

Since the leading terminal of the gate electrode of the thin-film transistor of which the resistor is made is protruded from the short-circuiting wire, the address wires and data wires to the gate electrode are incapable of establishing continuity to the short-circuiting wire even when the application of static electricity of high voltage inflicts a local damage of static electricity on the leading terminal of the gate electrode.

The liquid crystal display device of this invention is enabled, therefore, to acquire improved reliability of performance by precluding the short-circuiting wire and the thin-film transistor from otherwise possible disconnection or defective short-circuiting.

Fig. 1 is an equivalent circuit diagram of the first embodiment of this invention.

Fig. 2 is a plan view of a TFT resistance part of the first embodiment of this invention.

Fig. 3 is a longitudinally sectioned front view of the TFT resistance part of the first embodiment of this invention.

Fig. 4 is a diagram for aiding in the explanation of the effect of the first embodiment of this invention.

Fig. 5 is a diagram for aiding in the explanation of the effect of the first embodiment of this invention.

Fig. 6 is a plan view of a TFT resistance part of the second embodiment of this invention.

Fig. 7 is a plan view of a TFT resistance part of the third embodiment of this invention.

Fig. 8 is a plan view of a TFT resistance part of an embodiment of the related art.

Fig. 9 is a longitudinally sectioned front view of the TFT resistance part of the fourth embodiment of Figure 8.

Fig. 10 is a diagram for aiding in the explanation of the effect of the embodiment of the related art.

Fig. 11 is a plan view of a TFT resistance part of a further embodiment of the related art.

Fig. 12 is a plan view of a TFT resistance part of one more embodiment of the related art.

Fig. 13 is a plan view of a TFT resistance part of another embodiment of the related art.

Fig. 14 is a plan view of a TFT resistance part of a second further embodiment of the related art.

Fig. 15 is an equivalent circuit diagram of the TFT resistance part of the embodiment of Figure 14.

Fig. 16 is a plan view of a TFT resistance part of a third further embodiment of the related art.

Fig. 17 is a plan view of a TFT resistance part of a fourth further embodiment of the related art.

Fig. 18 is a plan view of a TFT resistance part of a fifth further embodiment of the related art.

Fig. 19 is a diagram for aiding in the explanation of the effect of the embodiment of Figure 19.

Fig. 20 is a plan view of a TFT resistance part of a sixth further embodiment of the related art.

Fig. 21 is a plan view of a TFT resistance part of the fourth embodiment of this invention.

Fig. 22 is a plan view of a TFT resistance part of the fifth embodiment of this invention.

Fig. 23 is a plan view of a TFT resistance part of the sixth embodiment of this invention.

Fig. 24 is a plan view of a TFT resistance part of the seventh embodiment of this invention.

Fig. 25 is a plan view of a TFT resistance part of the eighth embodiment of this invention.

Fig. 26 is an equivalent circuit diagram of a modified example of this invention.

Fig. 27 is an equivalent circuit diagram of an LC device showing features usable with the invention.

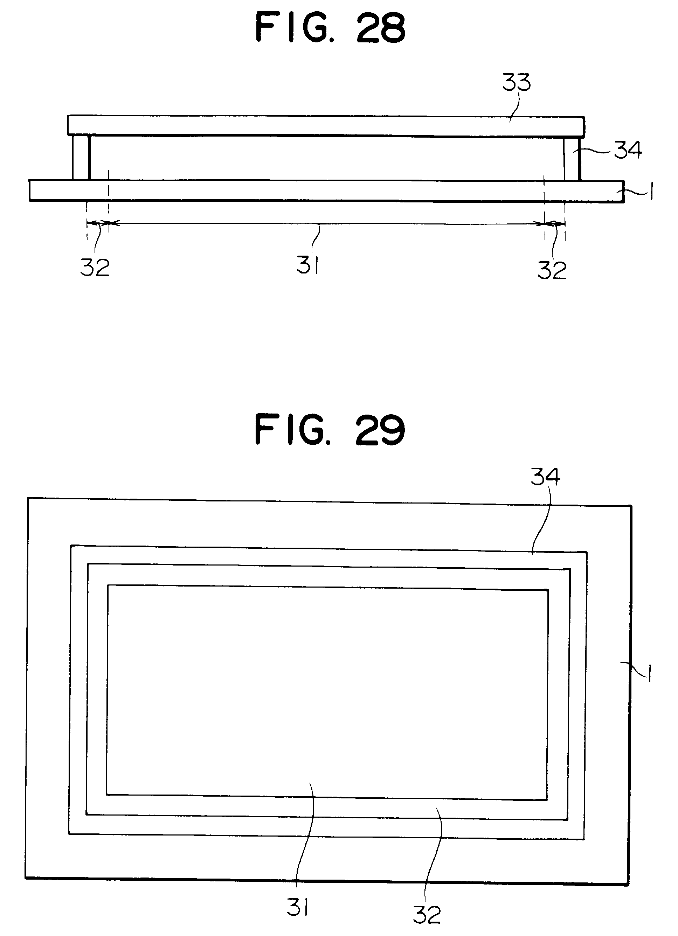

Fig. 28 is a front view of the modified example of this invention.

Fig. 29 is a plan view of another modified example of this invention.

Now, embodiments of this invention will be described below.

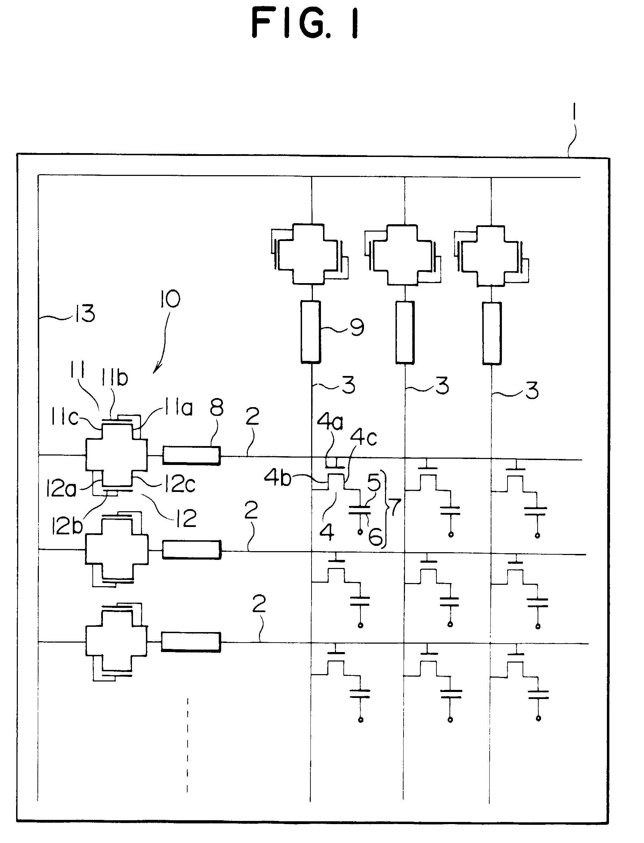

An equivalent circuit diagram of a liquid crystal display device as the first embodiment of this invention is shown in Fig. 1. In the diagram, 1 stands for an insulating substrate.

In the display region on the insulating substrate 1, a plurality of address wires 2, 2,... and a plurality of data wires 3, 3,... adapted to intersect the address wires 2, 2,... are formed.

Thin-film transistors (hereinafter referred to briefly as "TFT") are formed one each at the points of intersection of the address wires 2 and data wires 3, with the gate electrodes 4a thereof electrically connected to the data wires 3, the drain electrodes 4b thereof electrically connected to the data wires 3, and the source electrodes 4c thereof electrically connected to picture element electrodes 5 which are formed one each near the points of intersection.

Capacitors 7 are formed by interposing a liquid crystal (dielectric) between the picture element electrodes and their counter substrates 6.

The address wires 2 and data wires 3 are severally extended beyond the display region and electrically connected to driving pulse input pads 8 and 9 which are formed in the extended parts of these wires.

The address wires 2 and data wires 3 are severally extended further beyond the driving pulse input pads 8 and 9 and connected electrically to resistors 10.

Now, the construction of each resistor 10 will be described specifically below.

The resistor 10 is composed of two TFT's 11 and 12.

A drain electrode 11a and a gate electrode 11b of the TFT 11 and a source electrode 12c of the TFT 12 are electrically connected to the driving pulse input pad 8 (or 9).

A drain electrode 12a and a gate electrode 12b of the TFT 12 and a source electrode 11c of the TFT 11 are electrically connected to a short-circuiting wire 13 which are intended for mutually short-circuiting all the resistors 10.

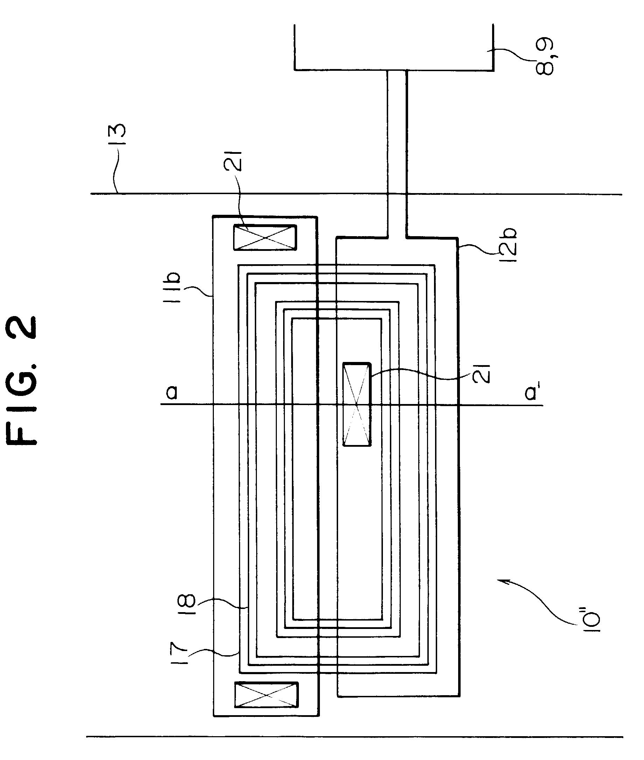

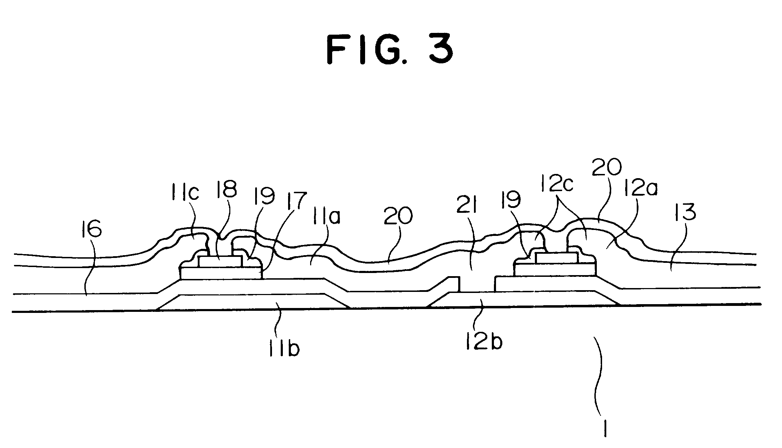

A magnified diagram of one resistor 10 and the part of the short-circuiting wire 13 approximating it is shown in Fig. 2 and a magnified cross section taken through Fig. 2 along the line a-a' is shown in Fig. 3.

As illustrated in Fig. 2, the resistor 10 is formed in a region corresponding to the central part of the short-circuiting wire 13. The short-circuiting wire 13 is electrically connected on the inner side than the resistor 10. Further, the short-circuiting wire 13 is formed in the shape of a ladder along the periphery of the insulating substrate 1.

The gate electrodes 11b and 12b are formed on the insulating substrate 1 and a gate-insulating film 16 is formed so as to cover these gate electrodes as illustrated in Fig. 3.

On the gate-insulating film 16, the drain electrodes 11a and 12a and the source electrodes 11c and 12c are formed through the medium of an a-Si film 17, a channel-protecting film 18, and a n⁺ a-Si film 19.

Then, a protective insulating film 20 is formed so as to cover these electrodes.

The drain electrodes 11a and 12a and the gate electrodes 11b and 12b are electrically interconnected by a through hole 21.

In the liquid crystal display device constructed in the manner described above, when the address wires 2 or data wires 3 are electrostatically charged positively or negatively relative to the potential of the short-circuiting wire 13 during the process of production of the device, an electric current flows via the resistors 10 between the address wires 2 or data wires 3 and the short-circuiting wire 13 in the direction of canceling the electric charge and serves the purpose of repressing the voltage to be generated between the address wires 2 (or data wires 3) and the short-circuiting wire 13 or further the data wires 3 (or address wires 2). Further, owing to the insertion of the resistors 10 between the address wires 2 and data wires 3 on the one part and the short-circuiting wire 13 on the other part, the TFT characteristics within the display region can be determined without requiring severance of the short-circuiting wire 13.

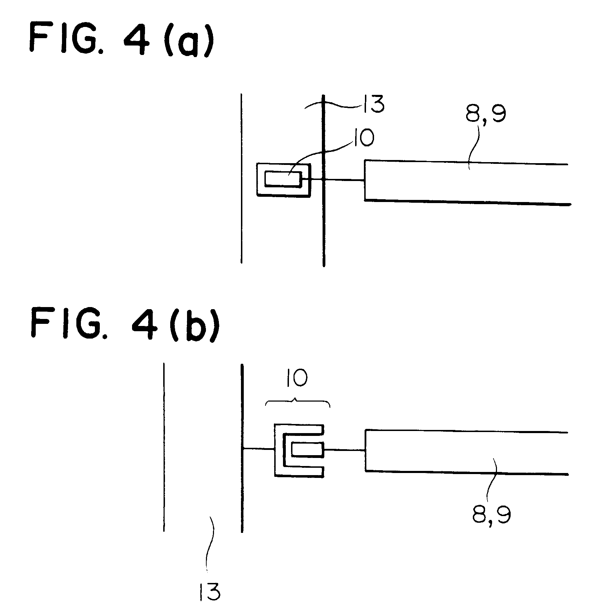

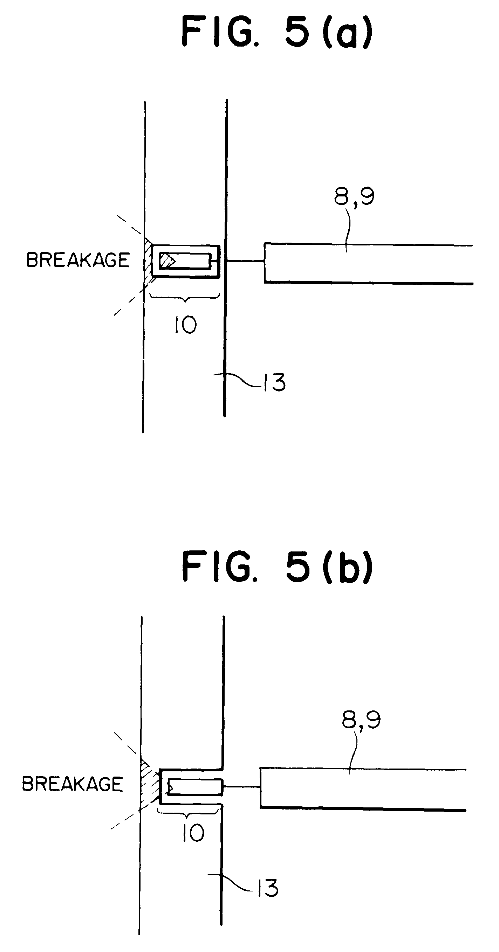

Moreover, in the liquid crystal display device of this invention, since the resistor 10 is formed in the region falling in the central part of the short-circuiting wire 13 as illustrated in Fig. 4 (a), the insulating substrate 1 is allowed a dimensional reduction as compared with the construction in which the resistor 10 is formed inside the short-circuiting wire 13 as illustrated in Fig. 4 (b). Further, since the short-circuiting is electrically connected on the inner side than the resistor 10 as illustrated in Fig. 5 (b), the susceptibility of the device to disconnection due to breakage is less than the short-circuiting wire 13 not electrically connected on the inner side than the resistor 10 as illustrated in Fig. 5 (b). This is because the breakage of the insulating substrate 1 is liable to originate from the outer edge of the substrate.

Now, the method of producing this liquid crystal display device will be described below (Fig. 3).
(1) On the insulating substrate 1 such as, for example, a glass substrate, the address wires 1, the gate electrodes 11b and 12b, and the address wire-driving pulse input pads 8 and 9 are formed by coating the insulating layer 1 with a film of the first wiring material such as, for example, MoTo, in a thickness of 250 nm by the spattering process and etching the applied coat by patterning and chemical dry etching (hereinafter referred to briefly as "CDE").
(2) A SiOₓ film about 350 nm in thickness is formed as the gate-insulating film 16 by the plasma CVD process.
(3) SiNₓ films 50 nm and 100 nm in thickness are formed respectively as the a-Si film 17 and the channel-protecting film 18 by the plasma DVD process.
(4) The SiNₓ film for the channel-protecting film 18 is etched for the purpose of patterning with a hydrofluoric acid type etching solution.
(5) The n⁺ a-Si film 19 is formed in a thickness of 50 nm by the plasma CVD process to establish contact between the source electrodes 11c and 12c on the one part and the drain electrodes 11a and 12a on the other part.
(6) The n⁺ a-Si film 19 and the a-Si film 17 are etched by the CDE process for the purpose of patterning the a-Si film 17.
(7) An ITO film 100 nm in thickness is formed as the picture element electrodes 5 by the spattering process and this film is patterned by etching with an aqua regina type etching solution.
(8) The gate-insulating through hole 21 for the date-insulating film 16 is patterned by etching with an aqueous ammonium fluoride solution.
(9) Films of the second wiring materials Cr and Al are formed in respective thicknesses of 50 nm and 500 nm by the spattering process. The data wires 3, the source electrodes 11c and 12c, and the data wire-driving pulse input pads 8 and 9 are formed by patterning the Cr and Al films by etching with a mixed solution of nitric acid, phosphoric acid, and acetic acid and an aqueous ammonium cerium nitrate solution.
(10) The part of the n⁺ a-Si film 19 exposed through the gaps between the source electrodes 11c and 12c on the one part and the drain electrodes 11a and 12a on the other part is removed by masking the source electrodes 11c and 12c and the drain electrodes 11a and 12a and etching the exposed part by the CDE process.
(11) A SiNₓ film 200 nm in thickness is formed as the protective insulating film 19 by the plasma CVD process and the through hole 21 in the protective insulating film is patterned by etching by the reactive ion etching (hereinafter referred to briefly as "RIE') process.

The liquid crystal-driving active matrix substrate aimed at by this invention can be produced by the method described above.

Since the TFT's 11 and 12 which are produced by following the procedures described above are substantially identical in construction with the TFT's 4 which are formed one each at the points of intersection between the address wires 2 and the data wires 3, the formation of the TFT's 11 and 12 and that of the TFT'S 4 can be simultaneously carried out and, as a result, the process of production can be simplified.

In the active matrix substrate of this invention, as the film of the first wiring material, films formed of Mo, Ta, TaN, Cr, Ni, Al, Al-Si-Cu, W, ITO, and Cu, and alloys having these metals as main components thereof or laminates formed of such metals and alloys by the spattering process or vacuum deposition process are usable in addition to the MoTa film formed by the spattering process.

As the gate-insulating film 16, the anodic oxide film of the first wiring material mentioned above, films formed of SiOₓ, SiNₓ, and TaOₓ by the spattering process, film of laminates formed of SiNₓ by the plasma CVD process are usable in addition to the SiOₓ film formed by the plasma CVD process.

Further, as the film of the second wiring material, films formed of Mo, Al, Cr, Cu, Ti, Ta, TaN, Al-Si-Cu, W, and ITO and alloys having these metals as main components thereof and laminates formed of such metals and alloys by the spattering process or vacuum deposition process are usable in addition to the laminates formed of Cr and Al by the spattering process.

As the channel-protecting film 18, films formed of SiOₓ and SiNₓ by the spattering process, films formed of SiOₓ and SiNₓ or laminates of such films by the plasma CVD process are usable in addition to the SiNₓ film formed by the plasma CVD process.

As the protective insulating film 19, films formed of SiOₓ and SiNₓ by the spattering process and films or laminates formed of SiOₓ and SiNₓ by the plasma CVD process are usable in addition to the SiNₓ film formed by the plasma CVD process.

The TFT's of which the resistors 10 are composed may be so constructed that the resistors 10 may be formed independently in the channel parts of the TFT's without incorporating therein any channel-protecting film. They may be otherwise in the top-gate pattern or coplanar pattern. Optionally, p-Si may be used in the place of a-Si.

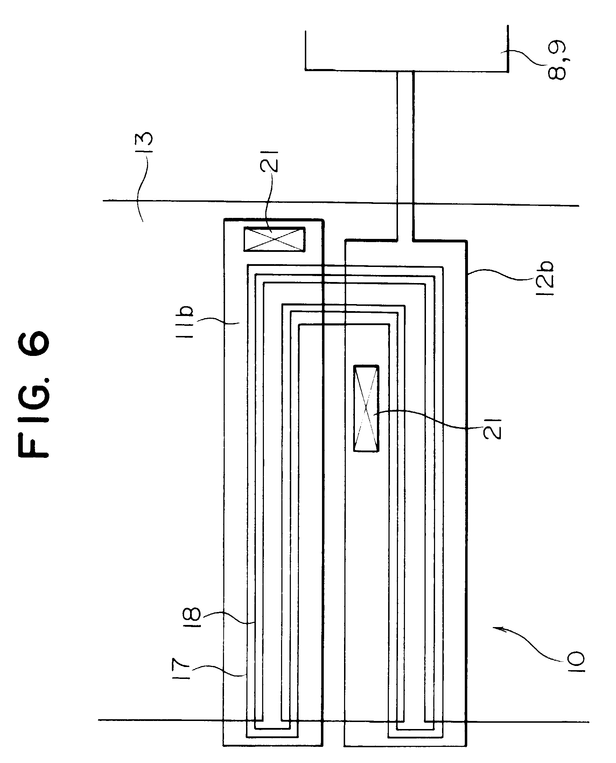

Now, the second embodiment of this invention will be described below with reference to Fig. 6.

Unlike the first embodiment in which the short-circuiting wire 13 is formed in the shape of a ladder along the periphery on the insulating substrate 1, the liquid crystal display device illustrated in this diagram has the short-circuiting wire 13 is formed in the shape of a comb provided in the interior thereof with a bus bar. In other respects, the short-circuiting wire 13 is identical in construction with that of the first embodiment and can be produced by the same method as used in the first embodiment.

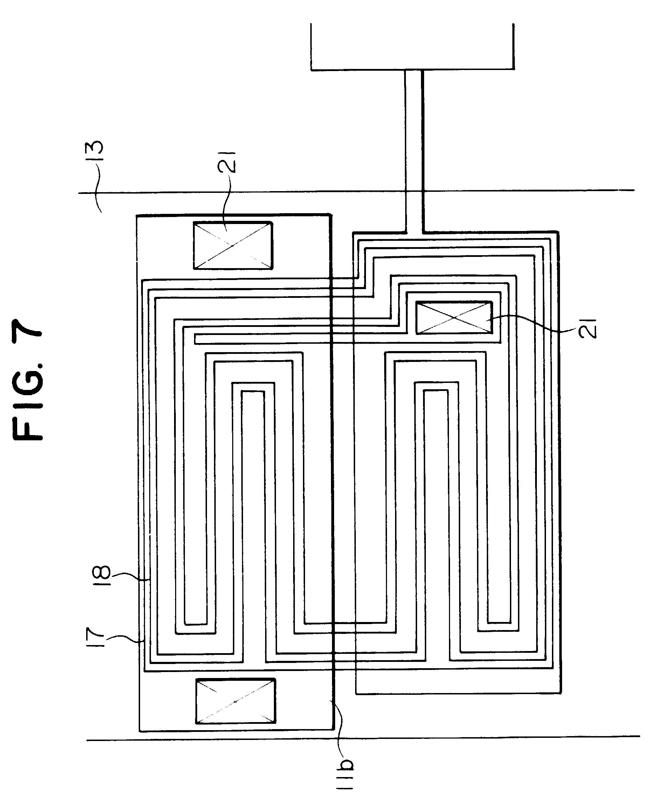

Now, the third embodiment of this invention will be described below with reference to Fig. 7.

In the liquid crystal display device illustrated in this diagram, when the resistors are to be formed with the TFT's 11 and 12 requiring a large channel width because of the width of the short-circuiting wire 13, the source electrodes 11c and 12c and drain electrodes 11b and 12b of the TFT's 11 and 12 forming the resistors 10 are formed in the shape of a comb. In other words, the liquid crystal display device is identical in construction to that of the first embodiment and can be produced by the same method. Optionally, this embodiment can be applied to the second embodiment.

Now, an embodiment of the related art will be described below.

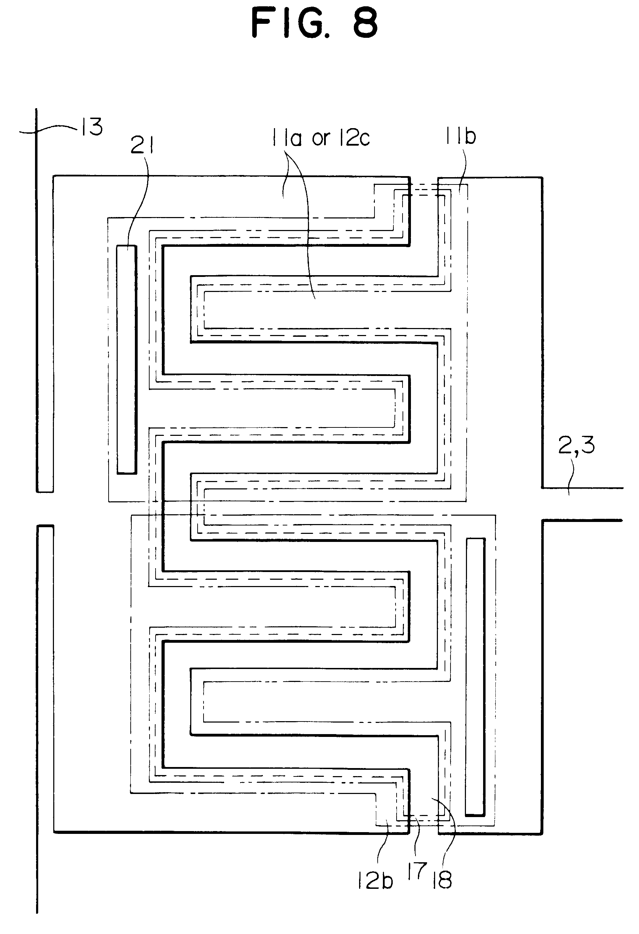

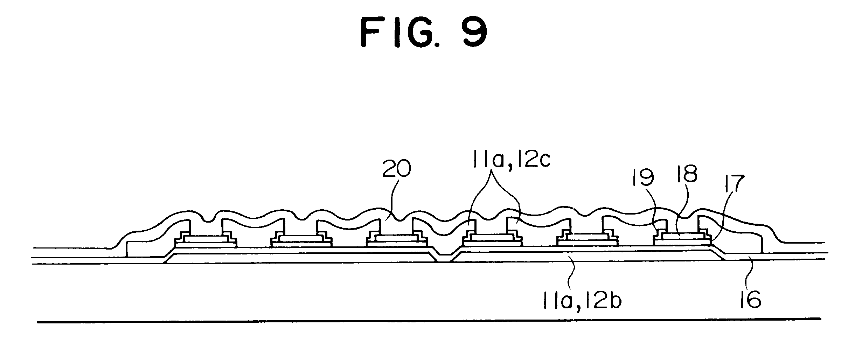

Though the equivalent circuit of the liquid crystal device of this embodiment is identical to that illustrated in Fig. 1, with the exception that the two devices are different in the construction of the resistors 10. A magnified diagram of one resistor 10 is shown in Fig. 8 and a magnified cross section taken through Fig. 8 along the line a-a' is shown in Fig. 9.

In the liquid crystal display device illustrated in these diagrams, the resistor 10 is formed between the driving pulse input pads 8 and 9 and the short-circuiting wire 13, the source electrodes 11c and 12c and drain electrodes 11a and 12a forming the resistor 10 are formed in the shape of a comb, and the channel parts of the TFT's 11 and 12 forming the resistor 10 are zigzagged.

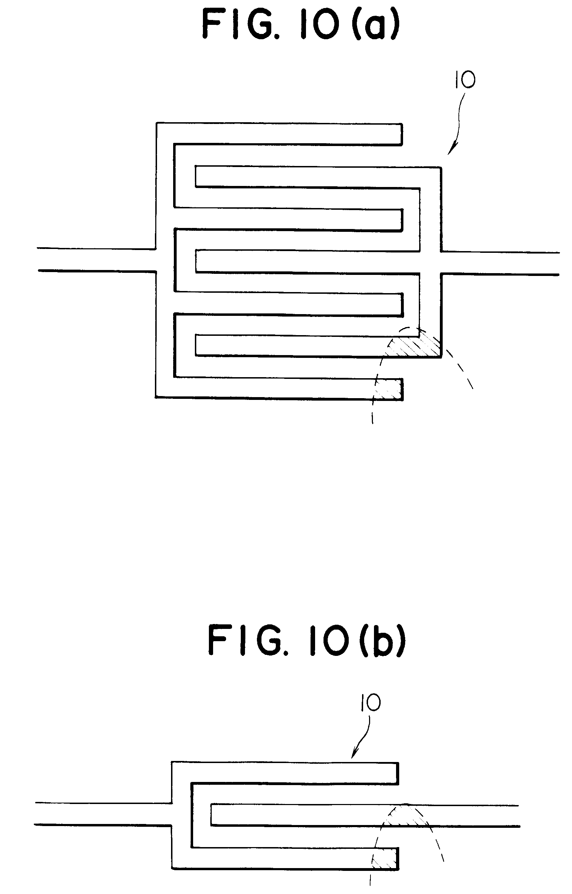

In this liquid crystal display device, since the source electrodes 11c and 12c and drain electrodes 11a and 12a of the TFT's 11 and 12 forming the resistor 10 are formed in the shape of a comb as illustrated in Fig. 10 (a), the device is less susceptible in the disconnection of circuit due to electrostatic damage (as indicated with a hatching in the diagram) than when the source electrodes 11c and 12c and drain electrodes 11a and 12a are formed as illustrated in Fig. 10 (b).

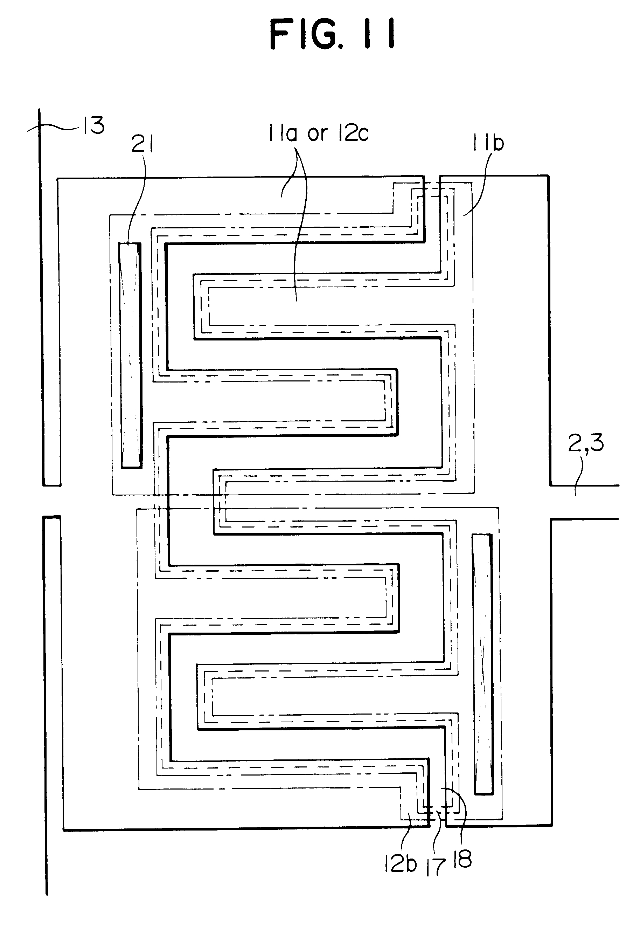

Now, a further embodiment of the related art will be described below with reference to Fig. 11.

The liquid crystal display device illustrated in this diagram is identical with that of the previous embodiment in respect that the source electrodes 11c and 12c and drain electrodes 11a and 12a forming the resistor 10 are formed in the shape of a comb and different therefrom in respect that the electrode fingers of the comb-shaped source electrodes 11c and 12c and drain electrodes 11a and 12a are increasingly long on the outer sides and the intervals between the opposed electrodes are increasingly narrow on the outer sides.

The liquid crystal display device of this embodiment, owing to the construction described above, is liable to sustain damage more readily in the parts of a smaller channel length, namely in the electrode fingers on the outer sides, when the resistors 10 are exposed to static electricity of large intensity. The central parts of the source electrodes 11c and 12c and drain electrodes 11a and 12a which form the sites of union between the address wires 2 and data wires 3 on the one part and the short-circuiting wire 13, therefore, are less susceptible of damage by static electricity and consequently less susceptible of disconnection of circuit.

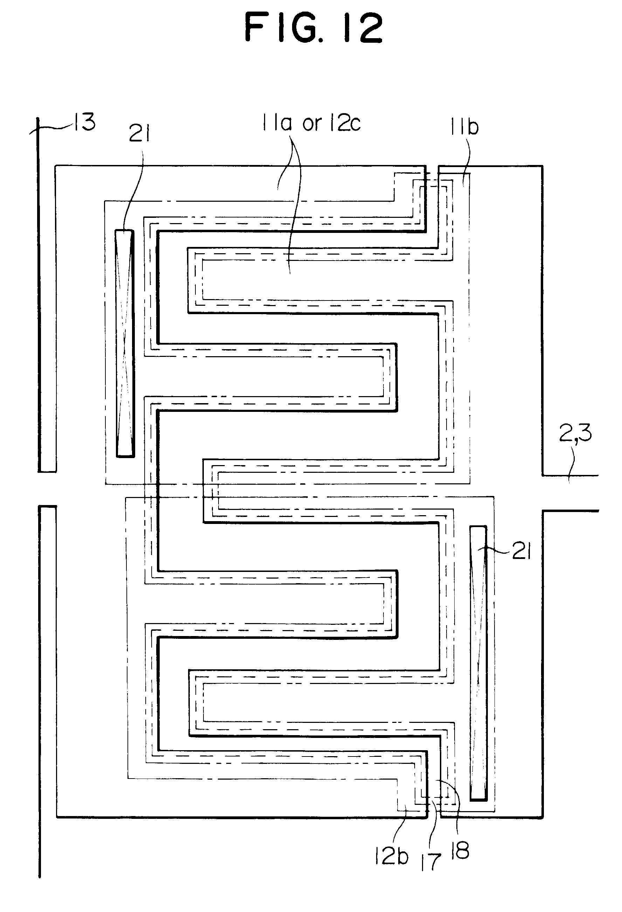

Now, one more embodiment of the related art will be described below with reference to Fig. 12.

The liquid crystal display device illustrated in this diagram is identical to that of the embodiment of Figure 8 in respect that the source electrodes 11c and 12c and drain electrodes 11a and 12a of the TFT's 11 and 12 forming the resistor 10 are formed in the shape of a comb and different therefrom in respect that the intervals between the intersecting electrode fingers of the comb-shaped source electrodes 11c and 12c and drain electrodes 11a and 12a are increasingly small on the outer sides.

In the liquid crystal display device of this embodiment, like that of the further embodiment, the central parts of the source electrodes 11c and 12c and drain electrodes 11a and 12a are susceptible only sparingly to damage by static electricity and consequently susceptible only sparingly to disconnection of circuit.

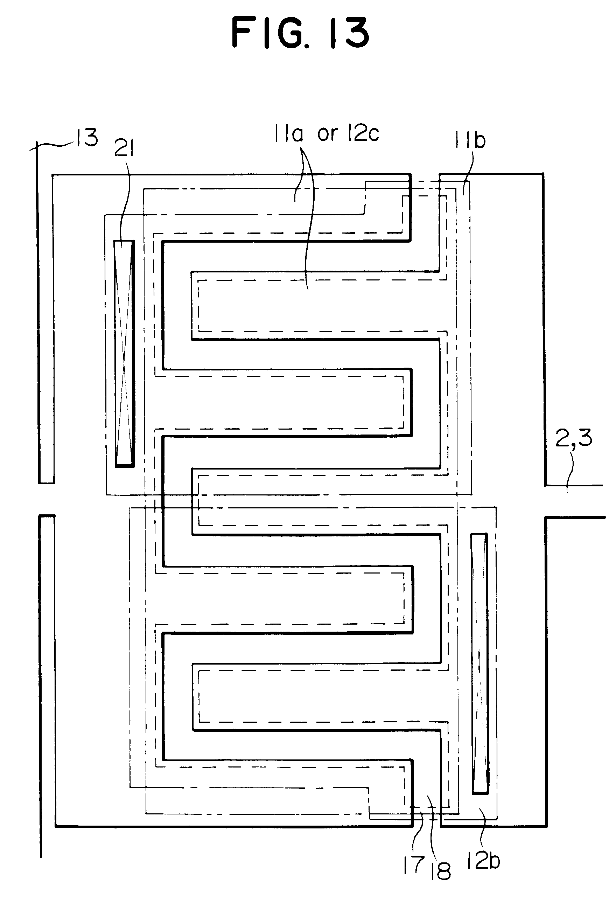

Now, another embodiment of the related art will be described below with reference to Fig. 13.

The liquid crystal display device illustrated in this diagram has the a-Si part 17 thereof formed in a nearly rectangular shape so as to cover wholly the resistance part of the TFT's 11 and 12, whereas those of Figures 8-12 have the a-Si films 17 and channel-protecting films 18 of the TFT's 11 and 12 forming the resistors 10 formed in a zigzagging pattern like the channel parts.

The liquid crystal device of this embodiment, owing to the construction described above, needs not form the a-Si parts 17 in a finely shaped pattern and, therefore, is allowed to form the resistors 10 with TFT'S of a large W/L (width to length) ratio within the same region.

Optionally, the construction of the embodiments of Figures 11 and 12 described above may be applied to the liquid crystal display device as constructed in this embodiment.

Now, the second further embodiment of the related art will be described below.

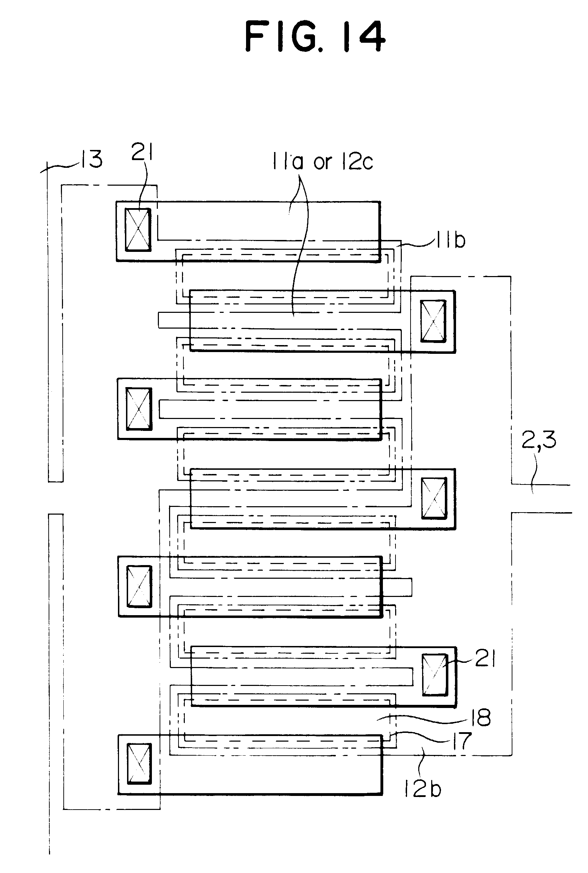

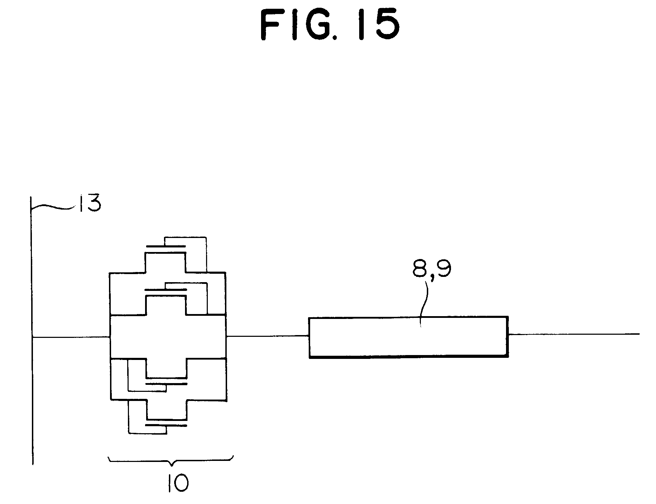

Fig. 14 is a plan view of the resistor 10 formed of TFT's in this embodiment and Fig. 15 is an equivalent circuit diagram between the driving pulse input pads 8 and 9 and the short-circuiting wire 13.

The liquid crystal display device illustrated in these diagrams is identical to that of the embodiment of Figures 8-10 in respect that the source electrodes 11c and 12c and drain electrodes 11a and 12a of the TFT's 11 and 12 forming the resistor 10 are formed in the shape of a comb and different therefrom in respect that the electrode fingers of the source electrodes 11c and 12c and drain electrodes 11a and 12a are electrically connected to the bus bar formed in the lower layer severally through the medium of separate through holes 21. To be specific, the TFT 11 and 12 are each formed of two TFT elements as illustrated in the equivalent circuit diagram of Fig. 15.

In the liquid crystal display device of this embodiment, owing to the construction described above, the resistance part continues to fulfill the part thereof infallibly even when one of these TFT elements is broken by static electricity.

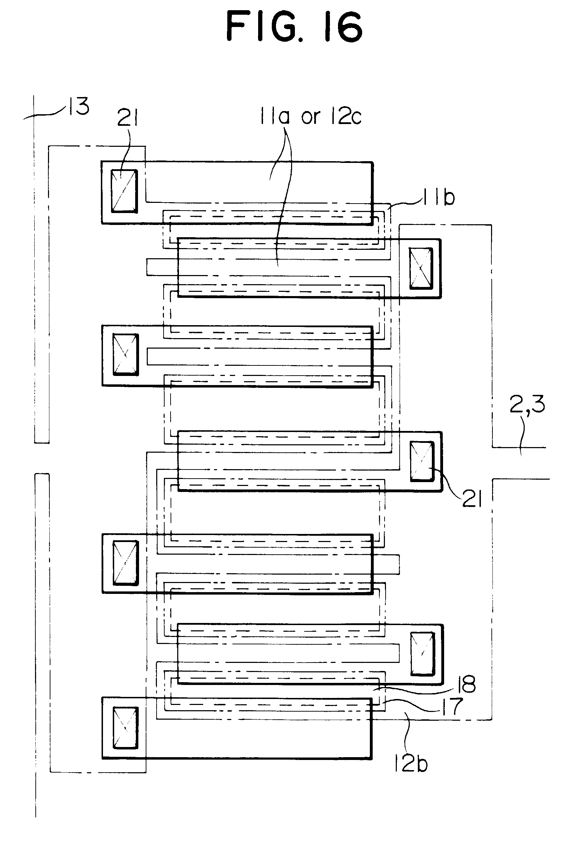

Now, the third further embodiment of the related art will be described below with reference to Fig. 16.

The liquid crystal display device illustrated in this diagram is identical to that of the previous embodiment in respect that the electrode fingers of the source electrodes 11c and 12c and drain electrodes 11a and 12a are electrically connected to the bus bar formed in the lower layer severally through the medium of separate through holes 21 and different therefrom in respect that the intervals between the intersecting electrode fingers of the source electrodes 11c and 12c and drain electrodes 11a and 12a are increasingly narrow on the outer sides.

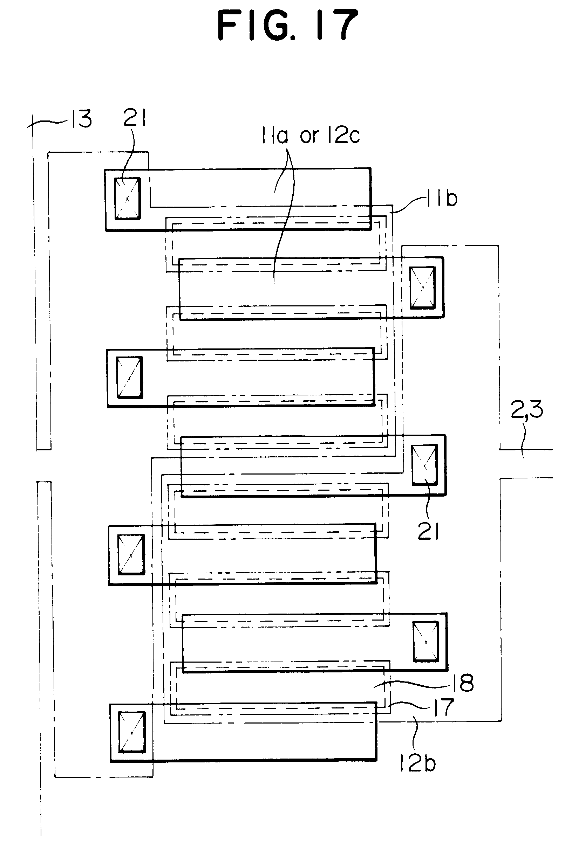

Now, the fourth further embodiment of the related art will be described below with reference to Fig. 17.

The liquid crystal display device illustrated in this diagram is identical to that of the second further embodiment in respect that the electrode fingers of the source electrodes 11c and 12c and drain electrodes 11a and 12a are electrically connected to the bus bar formed in the lower layer severally through the medium of separate through holes 21 and different therefrom in respect that the gate electrodes 11b and 12b are formed not in the shape of a comb but in a square shape and the one-piece square-shaped gate electrodes 11b and 12b severally cover the component electrode fingers of the source electrodes 11c and 12c and drain electrodes 11a and 12a.

Optionally, the construction of the embodiments of Figures 11 or 13 described above may be applied to the liquid crystal display device of the construction of this embodiment.

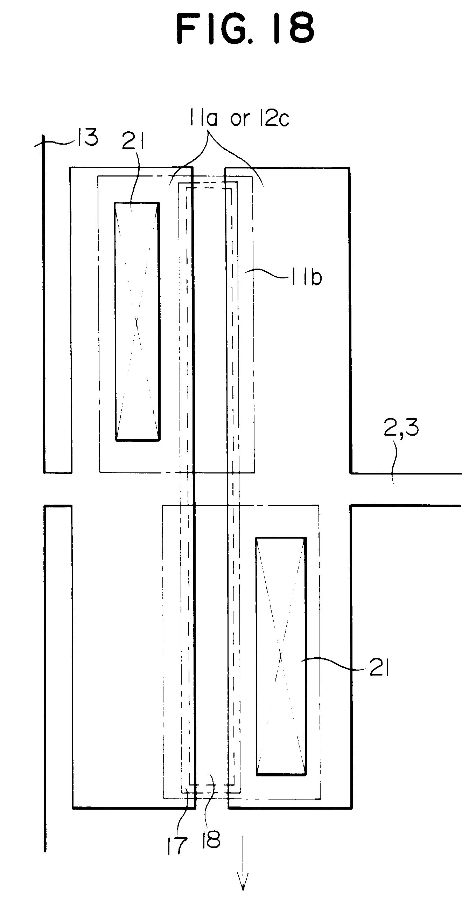

Now, the fifth embodiment of the related art will be described below with reference to Fig. 18.

In the liquid crystal display device illustrated in this diagram, the channel parts of the TFT's 11 and 12 forming the resistor 10 are formed in directions perpendicular to the address wires 2 and data wires 3 and the source electrodes 11c and 12c and the drain electrodes 11a and 12a are opposed across a linear interval.

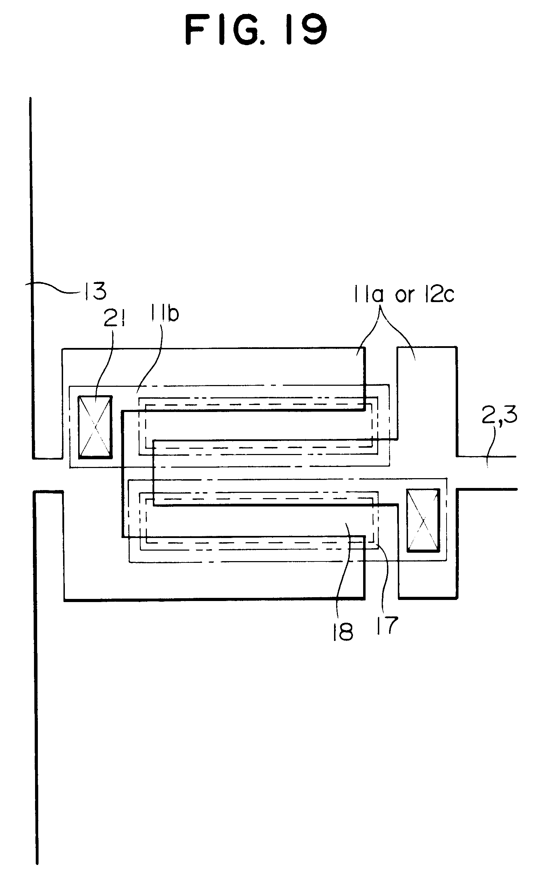

The liquid crystal display device of this embodiment, owing to the construction described above, hardly encounters perfect disruption of resistance and continues to fulfill the function of resistance infallibly even when any of the electrodes sustain damage caused by static electricity as compared with the construction in which the channel parts of the TFT's 11 and 12 are formed in directions parallel to the address wires 2 and data wires 3 as illustrated in Fig. 19.

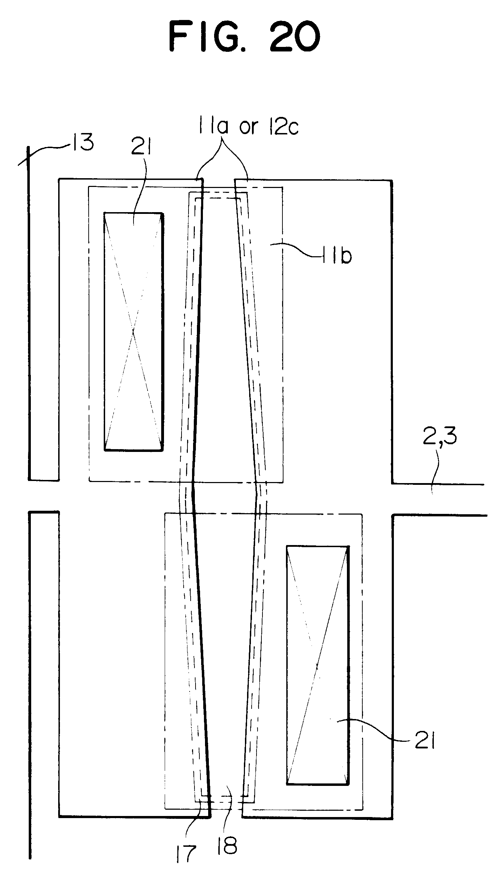

Now, the sixth embodiment of the related art will be described below with reference to Fig. 20.

The liquid crystal display device illustrated in this diagram has channel parts of the TFT's 11 and 12 forming the resistor 10 are formed in directions perpendicular to the address wires 2 and data wires 3 and different therefrom in respect that the intervals between the opposed source electrodes 11c and 12c and drain electrodes 11a and 12a are increasingly narrow on the outer sides.

In the liquid crystal display device of this embodiment, the central parts of the source electrodes 11c and 12c and drain electrodes 11a and 12a are susceptible only sparingly to damage caused by static electricity and consequently susceptible only sparingly to disconnection of circuit.

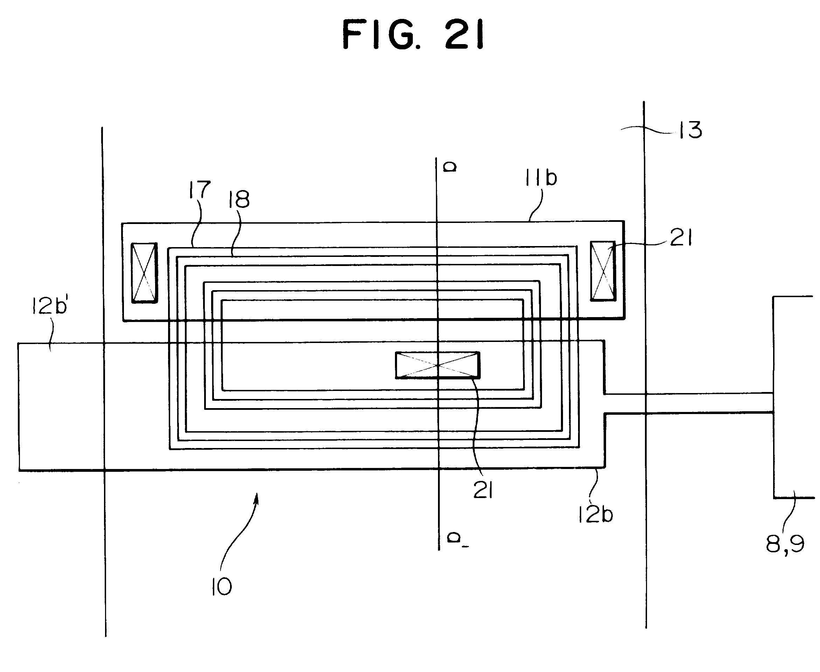

Now, the fourth embodiment of this invention will be described below with reference to Fig. 21.

The liquid crystal display device illustrated in this diagram is identical in construction to that of the first embodiment illustrated in Fig. 2 in respect that the resistors 10 are formed in the region falling in the central part of the short-circuiting wire 13 and different therefrom in respect that the leading terminal 12b' of the gate electrode 12b connected to the driving pulse input pads 8 and 9 in the gate electrodes of the TFT's 11 and 12 forming the resistor 10 are protruded from the short-circuiting wire 13.

In the liquid crystal display device of this embodiment, since the leading terminals 12b' of the gate electrodes 12b are protruded from the short-circuiting wire 13, the possibility that the address wires 2 and data wires 3 leading to the gate electrodes 12b will be short-circuited to the short-circuiting wire 13 when the application of static electricity of high voltage inflicts local damage upon the leading terminals 12b' of the gate electrodes 12b is nil.

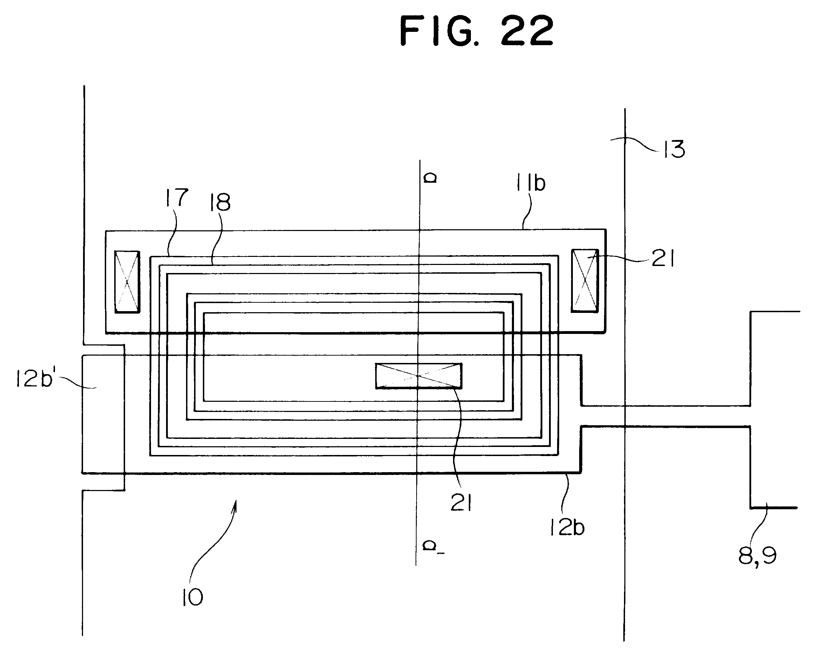

Now, the fifth embodiment of this invention will be described below with reference to Fig. 22.

In the liquid crystal display device illustrated in this diagram, since the part of the short-circuiting wire 12 falling near the leading terminal 12b' of the particular gate electrode 12b connected to the driving pulse input pads 8 and 9 in all the gate electrodes of the TFT's 11 and 12 forming the resistor 10 is formed in an inwardly depressed shape, the leading terminal 12b' of the gate electrode 12b is caused to protrude from the short-circuiting wire 13. The liquid crystal display device of this embodiment fulfills the same effect as that of the 13th embodiment.

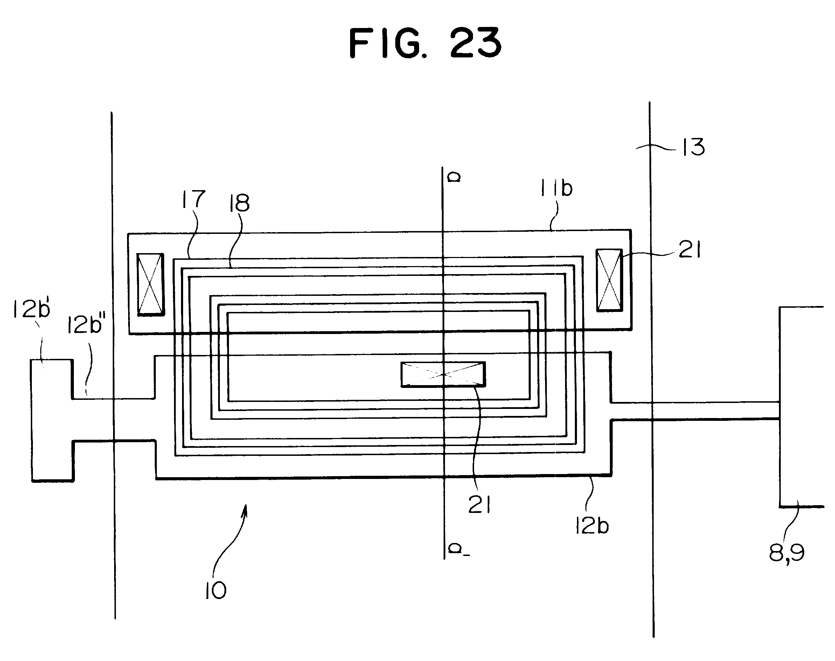

Now, the sixth embodiment of this invention will be described below with reference to Fig. 23.

The liquid crystal display device illustrated in this diagram is identical in construction to that of the 13th embodiment in respect that the leading terminal 12b' of the gate electrode 12b connected to the driving pulse input pads 8 and 9 in all the gate electrodes of the TFT's 11 and 12 forming the resistors 10 is protruded from the short-circuiting wire 13 and different therefrom in respect that the gate electrode 12b has a constriction 12b' near the leading terminal 12b".

Since the liquid crystal display device of this embodiment is constructed so as to incorporate therein the constriction 12b", the local damage by static electricity is more liable to occur at the leading terminal 12'' and the possibility that the address wires 2 and data wires 3 leading to the gate electrode 12b will be short-circuited to the short-circuiting wire 13 is further lessened.

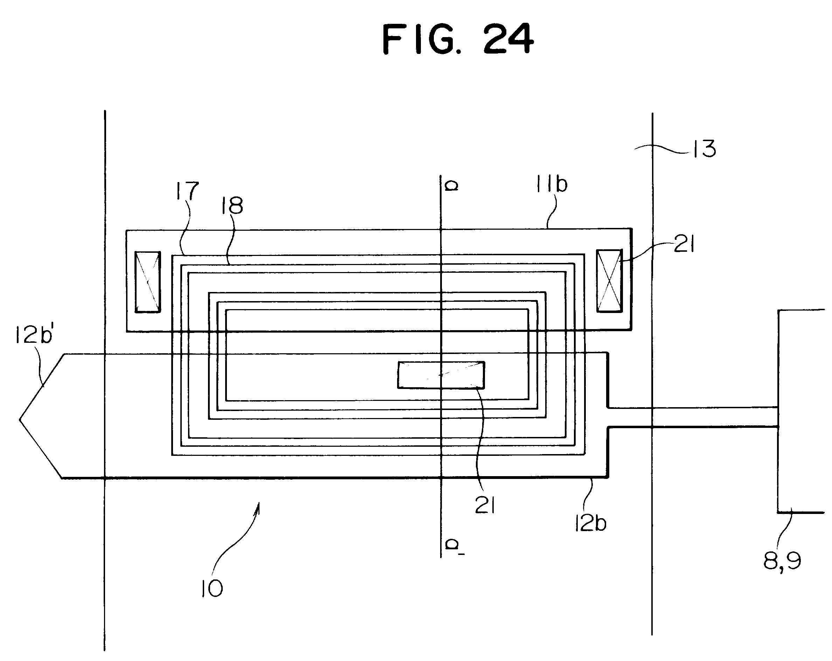

Now, the seventh embodiment of this invention will be described below with reference to Fig. 24.

The liquid crystal display device illustrated in this diagram is identical in construction to that of the 13th embodiment in respect that the leading terminal 12b' of the particular gate electrode 12b connected to the driving pulse input pads 8 and 9 in all the gate electrodes of the TFT's 11 and 12 forming the resistors 10 is protruded from the short-circuiting wire 13 and different therefrom in respect that the leading terminal 12b' is tapered forwardly.

In the liquid crystal display device of this embodiment, since the leading terminal 12b' is tapered forwardly, the local damage by static electricity is more liable to occur at the leading terminal 12' and the possibility that the address wires 2 and data wires 3 leading to the gate electrodes 12b will be short-circuited to the short-circuiting wire 13 is further lessened.

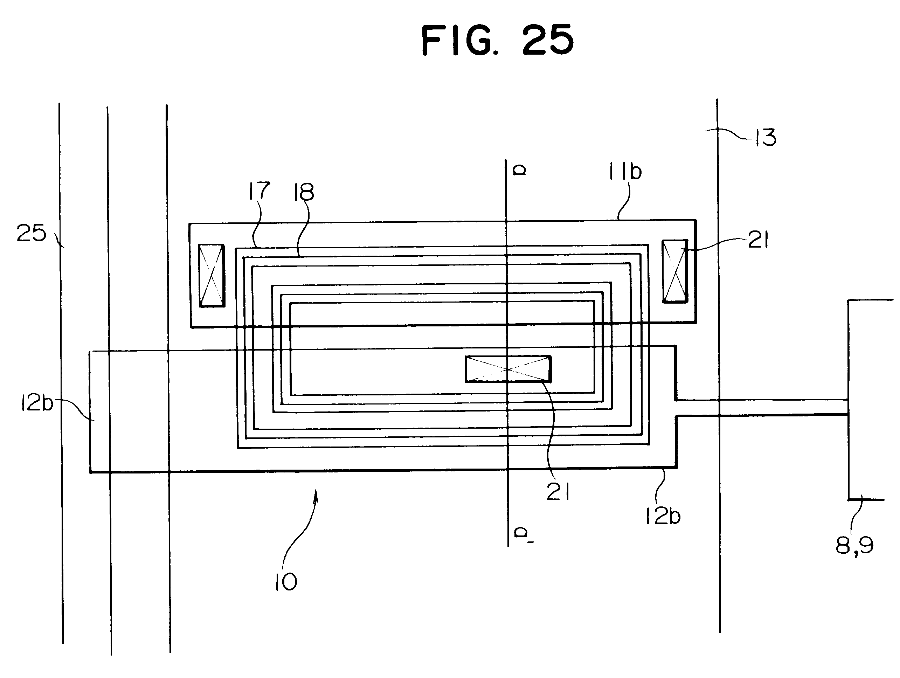

Now, the eighth embodiment of this invention will be described below with reference to Fig. 25.

The liquid crystal display device illustrated in this diagram is identical in construction to that of the 13th embodiment in respect that the leading terminal 12b' of the particular gate electrode 12b connected to the driving pulse input pads 8 and 9 in all the date terminals of the TFT's 11 and 12 forming the resistors 10 is protruded from the short-circuiting wire 13 and different therefrom in respect that the leading terminal 12b' of the gate electrode 12b is connected to a ring 25 made of a-Si outside the short-circuiting wire 13.

The ring 25 made of a-Si serves the purpose of preventing static electricity from manifesting its effect on the wires. When the damage done to the insulating film by static electricity is suffered to establish a shortcircuit between the ring 25 made of a-Si and the gate electrode of the resistor 10, the ring 25 made of a-Si which possesses amply high resistance manifests no effect either during the electrical test or during the lighting of the liquid crystal display device with the resistors 10 left intact.

Now, a further LC device showing features usable in the invention will be described below.

The liquid crystal display device of this embodiment has set in any of the embodiments cited above and the conventional liquid crystal display devices the magnitude of resistance of each of the resistors formed of TFT's in the range between 10 kΩ and 100 MΩ on the condition that the potential difference between the opposite terminals of the resistor is 20 V. If the magnitude of resistance falls short of 10 kΩ, the determination of the TFT characteristic within the display region is attained only with difficulty. If this magnitude exceeds 100 MΩ, the device in the process of production is easily susceptible of the effect of static electricity and the picture of display tends to be degraded in quality more conspicuously.

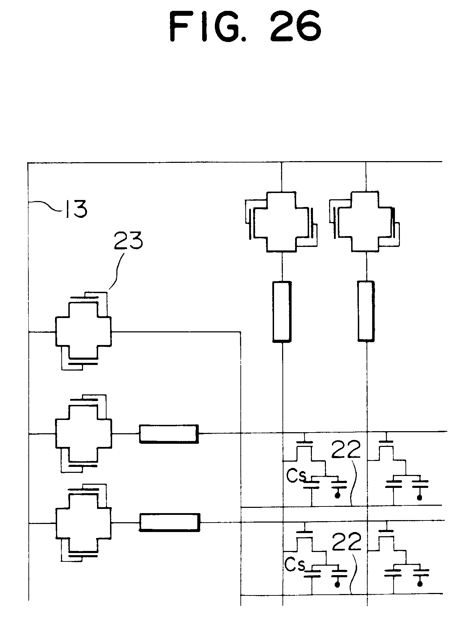

The embodiments cited thus far represent varying cases of application of this invention to the liquid crystal driving active matrix substrate of the construction destitute of an auxiliary capacity. Optionally, this invention may be applied to a liquid crystal driving active matrix substrate which is so constructed as to possess an auxiliary capacity Cs as illustrated in Fig. 26.

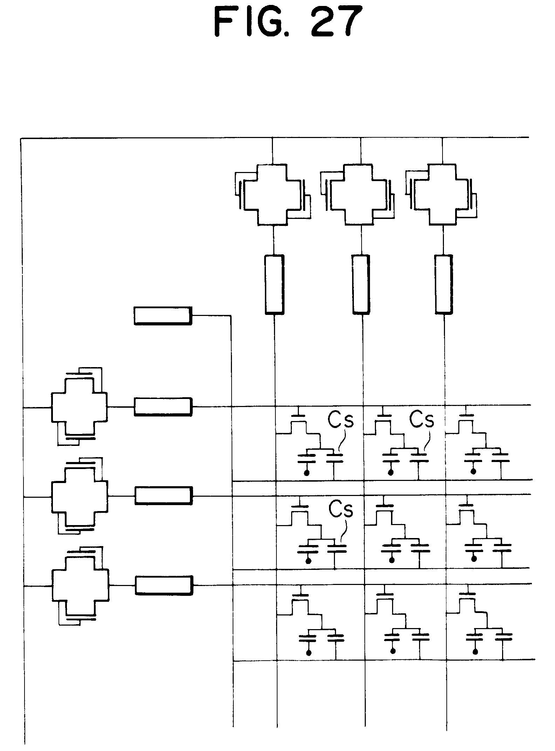

In this case, auxiliary capacity wires 22 may be adapted to be connected severally via resistors 13 to the short-circuiting wire 13 as illustrated in Fig. 27. The invention of this mode can be applied effectively to the conventional liquid crystal display device. By allowing the resistors 23 and the short-circuiting wire 13 to remain intact after completion of the device as a finished product, the characteristic of the auxiliary capacity Cs to resist static electricity can be improved. The capacity of the device per unit area can be increased, therefore, by decreasing the thickness of the insulating film of the auxiliary capacity Cs.

Further, the connection of the resistors may be made near the opposite terminals of a relevant wire or near either of the opposite terminals.

This embodiment has been depicted as a case of construction having each resistor 10 interposed between a bonding pad and a short ring. In case where the resistors 10 are to be left unsevered after the liquid crystal display device is completed, they need not interconnect the bonding pad and the short ring but may be formed at any positions outside the display region. The magnitude of resistance can be stably maintained when the short rings and the resistors 10 are located in the region intervening between the bonding pads and the display region, for example.

The resistors 10 may be formed in a region 32 of liquid crystal falling outside the display region 31. In this case, the resistors 10 are not affected by light because they are shielded with a black matrix superposed on a counter substrate 33 and the resistors 10 are enabled to maintain a stable magnitude of resistance because they are retained under a fixed circumstance of liquid crystal. The reference numeral 34 stands for a sealing member.

As the insulating substrate, a quartz substrate, a silicon wafer, a plastic sheet, etc. may be usable in addition to the glass substrate. Especially when the silicon wafer is adopted, the insulating substrate is completed by having an insulating film superposed on the silicon wafer.

This invention can be applied as effectively to a reflection type liquid crystal display device as to the transmission type liquid crystal display device having a driving circuit formed on an insulating substrate. In the case of the reflection type liquid crystal display device, the substrate needs not be an insulating transparent substrate.

As described above, this invention can prevent the short-circuiting wire and the thin-film transistors from the trouble of disconnection or shortcircuit due to physical damage or damage caused by static electricity and can enhance the reliability of performance. It also allows a dimensional reduction of the insulating substrate.

## Claims

1. A liquid crystal display device comprising:
an insulating substrate (1) manifesting an insulating property at least on a surface thereof;
a plurality of address wires (2) formed in a display region on said insulating substrate (1);
a plurality of data wires (3) formed to intersect said address wires (2);
first thin-film transistors (4) formed one each at the points of intersection of said address wires (2) and data wires (3) and having gate electrodes (4a) electrically connected to said address wires (2) and drain electrodes (4b) electrically connected to said data wires (3);
picture element electrodes (5) formed one each near said points of intersection and electrically connected to the source electrodes (4c) of said first thin-film transistors (4); and
a short-circuiting wire (13) formed along at least part of a periphery of the display region of said insulating substrate (1) and adapted to short-circuit said address wires (2) and data wires (3) to each other through a first resistor (10) made of a second thin-film transistor (11, 12);
characterised in that said short-circuiting wire (13) has a region in which said second thin-film transistor (11, 12) is formed, and said formed region is surrounded by said short-circuiting wire (13).

2. A liquid crystal display device according to claim 1, wherein said short-circuiting wire (13) is formed in the shape of a ladder along the periphery of said insulating substrate (1), and the first resistors (10) made of the second thin-film transistor (11, 12) are formed as openings in the ladder shaped short-circuiting wire (13).

3. A liquid crystal display device according to claim 1, wherein the magnitude of resistance of said first resistor (10) made of the second thin-film transistor (11, 12) is set in a range between 10 kΩ and 100 MΩ when the potential difference between opposite terminals of said first resistor (10) is 20 V.

4. A liquid crystal display device according to claim 1, further comprising an auxiliary capacitance (CS).

5. A liquid crystal display device according to claim 4, wherein an auxiliary capacitance line (22) for each auxiliary capacitance (CS) is connected to said short-circuiting wire (13) through a second resistor (23) of a third thin-film transistor.

6. A liquid crystal display device comprising:
an insulating substrate (1) manifesting an insulating property at least on a surface thereof;
a plurality of address wires (2) formed in a display region on said insulating substrate (1);
a plurality of data wires (3) formed to intersect said address wires (2);
first thin-film transistors (4) formed one each at the points of intersection of said address wires (2) and data wires (3) and having gate electrodes (4a) electrically connected to said address wires (2) and drain electrodes (4b) electrically connected to said data wires (3);
picture element electrodes (5) formed one each near said points of intersection and electrically connected to source electrodes (4c) of said first thin-film transistors (4); and,
a short circuiting wire (13) formed along at least part of a periphery of the display region of said insulating substrate (1) and adapted to short-circuit said address wires (2) and data wires (3) to each other through a first resistor (10) made of a second thin-film transistor (11,12);
characterised in that the short-circuiting wire (13) has a region in which the second thin-film transistor (11,12) is formed, and said formed region is surrounded by said short-circuiting wire (13) except that a gate electrode (11a, 12a) of the second thin-film transistor (11,12) protrudes outside the short-circuiting wire (13).

7. A liquid crystal display device according to claim 6, wherein the gate electrode (11a, 12a) of the second thin-film transistor (11, 12) is protruded from said short-circuiting wire (13) by causing a part of said short-circuiting wire (13) near the gate electrode (11a, 12a) to be formed in an inwardly depressed shape.

8. A liquid crystal display device according to claim 6, wherein said gate electrode (11a, 12a) of the second thin-film transistor (11, 12) is possessed of a constriction (12b").

9. A liquid crystal display device according to claim 6, wherein the gate electrode (12b') of the second thin-film transistor is tapered.

10. A liquid crystal display device according to claim 6, wherein the gate electrode of the second thin-film transistor is connected to a ring (25) made of a-Si outside said short-circuiting wire (13).

11. A liquid crystal display device according to claim 6, wherein the magnitude of resistance of said first resistor (10) made of the second thin-film transistor (11, 12) is set in the range between 10 kΩ and 100 MΩ when the potential difference between the opposite terminals of said first resistor (10) is 20 V.

12. A liquid crystal display device according to claim 6, further comprising an auxiliary capacitance (CS).

13. A liquid crystal display device according to claim 12, wherein an auxiliary capacitance wire (22) for each auxiliary capacitance (CS) is connected to said short-circuiting wire (13) through a second resistor (23) made of a third thin-film transistor.

## Patentansprüche

1. Flüssigkristall-Anzelgevorrichtung mit:
einem isolierenden Substrat (1), welches eine Isoliereigenschaft auf zumindest einer Oberfläche davon aufweist;
einer Vielzahl von Adreßdrähten (2), welche in einem Anzeigebereich auf dem isolierenden Substrat (1) gebildet sind;
einer Vielzahl von Datendrähten (3), welche derart gebildet sind, daß sie die Adreßdrähte (2) schneiden;
ersten Dünnfilmtransistoren (4), die jeweils an den Schnittpunkten der Adreßdrähte (2) und der Datendrähte (3) gebildet sind, und Gate-Elektroden (4a) aufweisen, die elektrisch mit den Adreßdrähten (2) verbunden sind, und Drain-Elektroden (4b) aufweisen, die elektrisch mit den Datendrähten (3) verbunden sind;
Bildelementelektroden (5), die jeweils nahe den Schnittpunkten gebildet sind und elektrisch mit den Source-Elektroden (4c) der ersten Dünnfilmtransistoren (4) verbunden sind; und
einem Kurzschlußdraht (13), der entlang zumindest eines Teils einer Peripherie des Anzeigebereichs des isolierenden Substrats (1) gebildet ist und derart gestaltet ist, daß er die Adreßdrähte (2) und die Datendrähte (3) miteinander über einen ersten Widerstand (10) aus einem zweiten Dünnfilmtransistor (11, 12) kurzschließt;
dadurch gekennzeichnet, daß der Kurzschlußdraht (13) einen Bereich aufweist, in dem der zweite Dünnfilmtransistor (11, 12) gebildet ist, und daß der Bildungsbereich von dem Kurzschlußdraht (13) umgeben ist.

2. Flüssigkristall-Anzeigevorrichtung nach Anspruch 1, wobei der Kurzschlußdraht (13) in der Gestalt einer Leiter entlang der Peripherie des isolierenden Substrats (1) gebildet ist und die ersten Widerstände (10) aus den zweiten Dünnfilmtransistoren (11, 12) als Öffnungen in dem leiterartig gestalteten Kurzschlußdraht (13) gebildet sind.

3. Flüssigkristall-Anzeigevorrichtung nach Anspruch 1, wobei die Größe des Widerstandswerts des ersten Widerstands (10) aus dem zweiten Dünnfilmtransistor (11, 12) in einem Bereich zwischen 10 kΩ und 100 MΩ eingestellt ist, wenn die Potentialdifferenz zwischen gegenüberliegenden Anschlüssen des ersten Widerstands (10) 20 V beträgt.

4. Flüssigkristall-Anzeigevorrichtung nach Anspruch 1, welche weiterhin eine Hilfskapazität (CS) aufweist.

5. Flüssigkristall-Anzeigevorrichtung nach Anspruch 4, wobei eine Hilfskapazitätsleitung (22) für jede Hilfskapazität (CS) mit dem Kurzschlußdraht (13) über einen zweiten Widerstand (23) eines dritten Dünnfilmtransistors verbunden ist.

6. Flüssigkristall-Anzeigevorrichtung mit:
einem isolierenden Substrat (1), welches eine Isoliereigenschaft auf zumindest einer Oberfläche davon aufweist;
einer Vielzahl von Adreßdrähten (2), die in einem Anzeigebereich auf dem isolierenden Substrat (1) gebildet sind;
einer Vielzahl von Datendrähten (3), die derart gebildet sind, daß sie die Adreßdrähte (2) schneiden;
ersten Dünnfilmtransistoren (4), die jeweils an den Schnittpunkten der Adreßdrähte (2) und der Datendrähte (3) gebildet sind und Gate-Elektroden (4a) aufweisen, die elektrisch mit den Adreßdrähten (2) verbunden sind, und Drain-Elektroden (4b) aufweisen, die elektrisch mit den Datendrähten (3) verbunden sind;
Bildelementelektroden (5), die jeweils nahe den Schnittpunkten gebildet sind und elektrisch mit den Source-Elektroden (4c) der ersten Dünnfilmtransistoren (4) verbunden sind; und
einem Kurzschlußdraht (13), der zumindest entlang eines Teils einer Peripherie des Anzeigebereichs des isolierenden Substrats (1) gebildet ist und derart gestaltet ist, daß er die Adreßdrähte (2) und die Datendrähte (3) miteinander über einen ersten Widerstand (10) kurzschließt, der aus einem zweiten Dünnfilmtransistor (11, 12) gebildet ist;
dadurch gekennzeichnet, daß der Kurzschlußdraht (13) einen Bereich aufweist, in dem der zweite Dünnfilmtransistor (11, 12) gebildet ist, und daß der Bildungsbereich von dem Kurzschlußdraht (13) umgeben ist, und zwar mit Ausnahme dessen, daß eine Gate-Elektrode (11a, 12a) des zweiten Dünnfilmtransistors (11, 12) von dem Kurzschlußdraht (13) vorsteht.

7. Flüssigkristall-Anzeigevorrichtung nach Anspruch 6, wobei die Gate-Elektrode (11a, 12a) des zweiten Dünnfilmtransistors (11, 12) von dem Kurzschlußdraht (13) vorsteht, wobei ein Tell des Kurzschlußdraht (13) nahe der Gate-Elektrode (11a, 12a) in einer nach innen niedergedrückten Gestalt gebildet ist.

8. Flüssigkristall-Anzeigevorrichtung nach Anspruch 6, wobei die Gate-Elektrode (11a, 12a) des zweiten Dünnfilmtransistors (11, 12) eine Einschnürung (12b") aufweist.

9. Flüssigkristall-Anzeigevorrichtung nach Anspruch 6, wobei die Gate-Elektrode (12b') des zweiten Dünnfilmtransistors angeschrägt ist.

10. Flüssigkrlstall-Anzeigevorrichtung nach Anspruch 6, wobei die Gate-Elektrode des zweiten Dünnfilmtransistors mit einem Ring (25) aus a-Si außerhalb des Kurzschlußdrahts (13) verbunden ist.

11. Flüssigkrlstall-Anzeigevorrichtung nach Anspruch 6, wobei die Größe des Widerstandswerts des ersten Widerstands (120) aus dem zweiten Dünnfilmtransistor (11, 12) im Bereich zwischen 10 kΩ und 100 MΩ eingestellt ist, wenn die Potentialdifferenz zwischen den gegenüberliegenden Anschlüssen des ersten Widerstands (10) 20 V beträgt.

12. Flüssigkristall-Anzeigevorrichtung nach Anspruch 6, welche weiterhin eine Hilfskapazität (CS) aufweist.

13. Flüssigkristall-Anzeigevorrichtung nach Anspruch 12, wobei ein Hilfskapazitätsdraht (22) für jede Hilfskapazität (CS) mit dem Kurzschlußdraht (13) über einen zweiten Widerstand (23) aus einem dritten Dünnfilmtransistor verbunden ist.

## Revendications

1. Dispositif d'affichage à cristaux liquides comprenant:
un substrat isolant (1) manifestant une propriété isolante au moins sur l'une de ses surfaces;
une pluralité de fils d'adresse (2) formés dans une région d'affichage sur ledit substrat isolant (1);
une pluralité de fils de données (3) formés de manière à intersecter lesdits fils d'adresse (2);
des premiers transistors à film mince (4) formés chacun au niveau des points d'intersection desdits fils d'adresse (2) et desdits fils de données (3) et comportant des électrodes de grille (4a) connectées électriquement auxdits fils d'adresse (2) et des électrodes de drain (4b) connectées électriquement auxdits fils de données (3);
des électrodes d'élément d'image (5) formées chacune à proximité desdits points d'intersection et connectées électriquement aux électrodes de source (4c) desdits premiers transistors à film mince (4); et
un fil de mise en court-circuit (13) formé le long d'au moins une partie d'une périphérie de la région d'affichage dudit substrat isolant (1) et adapté pour mettre en court-circuit lesdits fils d'adresse (2) et lesdits fils de données (3) les uns avec les autres par l'intermédiaire d'une première résistance (10) constituée par un second transistor à film mince (11, 12);
caractérisé en ce que ledit fil de mise en court-circuit (13) comporte une région dans laquelle ledit second transistor à film mince (11, 12) est formé, et ladite région formée est entourée par ledit fil de mise en court-circuit (13).

2. Dispositif d'affichage à cristaux liquides selon la revendication 1, dans lequel ledit fil de mise en court-circuit (13) est formé selon la forme d'une échelle le long de la périphérie dudit substrat isolant (1), et les premières résistances (10) constituées par le second transistor à film mince (11, 12) sont formées en tant qu'ouvertures dans le fil de mise en court-circuit en forme d'échelle (13).

3. Dispositif d'affichage à cristaux liquides selon la revendication 1, dans lequel la valeur de résistance de ladite première résistance (10) constituée par le second transistor à film mince (11, 12) est établie dans une plage entre 10 kΩ et 100 MΩ lorsque la différence de potentiel entre des bornes opposées de ladite première résistance (10) vaut 20 V.

4. Dispositif d'affichage à cristaux liquides selon la revendication 1, comprenant en outre une capacité auxiliaire (CS).

5. Dispositif d'affichage à cristaux liquides selon la revendication 4, dans lequel une ligne de capacité auxiliaire (22) pour chaque capacité auxiliaire (CS) est connectée audit fil de mise en court-circuit (13) par l'intermédiaire d'une seconde résistance (23) constituée par un troisième transistor à film mince.

6. Dispositif d'affichage à cristaux liquides comprenant:
un substrat isolant (1) manifestant une propriété isolante au moins sur l'une de ses surfaces;
une pluralité de fils d'adresse (2) formés dans une région d'affichage sur ledit substrat isolant (1);
une pluralité de fils de données (3) formés de manière à intersecter lesdits fils d'adresse (2);
des premiers transistors à film mince (4) formés chacun au niveau des points d'intersection desdits fils d'adresse (2) et desdits fils de données (3) et comportant des électrodes de grille (4a) connectées électriquement auxdits fils d'adresse (2) et des électrodes de drain (4b) connectées électriquement auxdits fils de données (3);
des électrodes d'élément d'image (5) formées chacune à proximité desdits points d'intersection et connectées électriquement aux électrodes de source (4c) desdits premiers transistors à film mince (4); et
un fil de mise en court-circuit (13) formé le long d'au moins une partie d'une périphérie de la région d'affichage dudit substrat isolant (1) et adapté pour mettre en court-circuit lesdits fils d'adresse (2) et lesdits fils de données (3) les uns avec les autres par l'intermédiaire d'une première résistance (10) constituée par un second transistor à film mince (11, 12),
caractérisé en ce que ledit fil de mise en court-circuit (13) comporte une région dans laquelle ledit second transistor à film mince (11, 12) est formé, et ladite région formée est entourée par ledit fil de mise en court-circuit (13) à l'exception du fait qu'une électrode de grille (11a, 12a) du second transistor à film mince (11, 12) fait saillie à l'extérieur du fil de mise en court-circuit (13).

7. Dispositif d'affichage à cristaux liquides selon la revendication 6, dans lequel l'électrode de grille (11a, 12a) du second transistor à film mince (11, 12) fait saillie depuis ledit fil de mise en court-circuit (13), ce qui a pour effet qu'une partie dudit fil de mise en court-circuit (13) à proximité de l'électrode de grille (11a, 12a) est formée selon une forme enfoncée vers l'intérieur.

8. Dispositif d'affichage à cristaux liquides selon la revendication 6, dans lequel ladite électrode de grille (11a, 12a) du second transistor à film mince (11, 12) possède un rétrécissement (12b").

9. Dispositif d'affichage à cristaux liquides selon la revendication 6, dans lequel l'électrode de grille (12b') du second transistor à film mince est à bords inclinés.

10. Dispositif d'affichage à cristaux liquides selon la revendication 6, dans lequel l'électrode de grille du second transistor à film mince est connectée à un anneau (25) réalisé en a-Si à l'extérieur dudit fil de mise en court-circuit (13).

11. Dispositif d'affichage à cristaux liquides selon la revendication 6, dans lequel la valeur de résistance de ladite première résistance (10) constituée par le second transistor à film mince (11, 12) est établie dans une plage entre 10 kΩ et 100 MΩ lorsque la différence de potentiel entre les bornes opposées de ladite première résistance (10) vaut 20 V.

12. Dispositif d'affichage à cristaux liquides selon la revendication 6, comprenant en outre une capacité auxiliaire (CS).

13. Dispositif d'affichage à cristaux liquides selon la revendication 12, dans lequel un fil de capacité auxiliaire (22) pour chaque capacité auxiliaire (CS) est connectée audit fil de mise en court-circuit (13) par l'intermédiaire d'une seconde résistance (23) constituée par un troisième transistor à film mince.
